# EUROPÄISCHE PATENTSCHRIFT

(11) **EP 2 420 686 B1**
(45) Veröffentlichungstag und Bekanntmachung des Hinweises auf die Patenterteilung: **01.03.2017**
(21) Anmeldenummer: 11005815.3
(22) Anmeldetag: 15.07.2011
(51) Int. Cl.: F16B 39/10

(54) **Verdrehsicherung für Schrauben**
Anti-twist device for screws
Sécurité anti-rotation pour visserie

(43) Veröffentlichungstag der Anmeldung: 22.02.2012
(73) Patentinhaber: Astrium GmbH, 82024 Taufkirchen (DE)
(72) Erfinder: Retat, Ingo, Dr., 28832 Achim (DE); Börchers, Günter, 28865 Lilienthal (DE); Köhler, Horst, 28279 Bremen (DE); Tritsch, Wolfgang, 28201 Bremen (DE)
(74) Vertreter: Marschall, Stefan

(56) Entgegenhaltungen:
- EP-A2- 0 811 776
- DE-C1- 3 233 976
- GB-A- 581 213

## Beschreibung

Die Erfindung betrifft eine Verdrehsicherung für eine Schraube zur lösbaren Verbindung einer zu einer Weltraumstation zu transportierenden Nutzlast als erstem Bauteil mit einer in einem Transportfahrzeug angeordneten Halterung als zweitem Bauteil, bei der Sicherungselemente die Schraube beaufschlagen.

Eine derartige Verdrehsicherung ist aus der GB 581 213 A bekannt.

Für die Sicherung von Gütern während des Transportes werden häufig Schrauben eingesetzt, die am Bestimmungsort des Transportgutes wieder gelöst werden müssen, so auch bei der logistischen Versorgung von Raumstationen im Weltraum. Wenn ein Transportfahrzeug externe Nutzlasten zu einer Raumstation transportiert, dann müssen diese zum Teil von Astronauten in Raumanzügen aus dem Transportfahrzeug entnommen werden. In der Schwerelosigkeit können Astronauten, insbesondere wenn sie im Außeneinsatz einen Raumanzug tragen müssen, jedoch nur geringe Kräfte und Drehmomente für das Lösen von Befestigungsschrauben aufbringen. Daher sind bei der Transportsicherung solcher Nutzlasten die Anzugsmomente der verwendeten Schrauben relativ begrenzt, so dass die aus dem Anzugsmoment resultierende Vorspannung oftmals nicht als zuverlässige Verdrehsicherung für die verwendeten Schrauben eingesetzt werden kann. Desgleichen verbietet sich der Einsatz von anaeroben Schraubensicherungsflüssigkeiten, die zu einem sehr hohen Losbrech-Moment führen und die bei einem Rücktransport von Gütern zur Erde im luftleeren Raum nicht nutzbar sind.

Es werden daher für eine Verwendung unter Weltraumbedingungen oftmals Vorrichtungen der eingangs genannten Art genutzt, die ein ungewolltes Verdrehen der Schraube über ihre äußere Form verhindern. Dabei ist es insbesondere wünschenswert, dass eine derartige Verdrehsicherung möglichst einfach zu entriegeln ist. So greifen bei einer bekannten Verdrehsicherung, dem sogenannten Flight Releasable Attachment Mechanism, insgesamt vier federbelastete Hebel in Nuten der zu sichernden Schraube ein. Hierfür muß die Schraube bis zu einem exakten Winkel gedreht werden, damit Hebel und Nut einander gegenüberliegen. Die Entriegelung wird dann durch das Einführen eines Werkzeuges erreicht, das die Hebel zur Seite drückt. Eine Miniaturisierung dieses aus jeweils vier Hebeln, Federn und Drehlagern bestehenden Mechanismus würde sowohl die Belastbarkeit als auch die Zuverlässigkeit reduzieren.

Daneben ist aus der EP 0811 776 A2 eine Verdrehsicherung für Schrauben für terrestrische Anwendungen bekannt geworden, bei der Schrauben zur Befestigung eines ersten Bauteiles an einem zweiten Bauteil über Sicherungselemente beaufschlagt werden, die mittels Reibung bzw. Klemmdruck funktionieren. Ferner ist, ebenfalls für terrestrische Anwendungen, aus der EP 0811 776 A2 eine Verdrehsicherung für Schrauben bekannt geworden, bei der ein Clip vorgesehen ist, der manuell auf eine Mutter und eine Schraube gesteckt wird und der dann durch einen Formschluß ein Verdrehen verhindert. Keine dieser beiden bekannten Verdrehsicherungen ist für einen Einsatz unter Weltraumbedingungen vorgesehen.

Aufgabe der vorliegenden Erfindung ist es, eine Verdrehsicherung der eingangs genannten Art für eine Verwendung unter Weltraumbedingungen so auszubilden, dass sie möglichst wenig Raum beansprucht und zuverlässig das Verdrehen einer Schraube verhindert und dass sie zugleich beliebig oft wiederverwendbar ist.

Diese Aufgabe wird erfindungungsgemäß durch eine Verdrehsicherung mit den kennzeichnenden Merkmalen des Patentanspruchs 1 gelöst.

Die erfindungsgemäße Verdrehsicherung hat den Vorteil, dass sie relativ klein ist und in ihrer bevorzugten Ausführungsform aus nur einem Teil besteht, wodurch eine hohe Zuverlässigkeit erreicht wird. Sie funktioniert zudem unabhängig von der exakten Winkelstellung der zu sichernden Schraube.

Weitere vorteilhafte Ausgestaltungen der Erfindung sind durch die Merkmale der Unteransprüche gekennzeichnet.

Nachfolgend soll die Erfindung anhand durch in der Zeichnung dargestellten Ausführungsbeispiels näher erläutert werden. Es zeigen:
- Fig. 1: ein Sicherungselement für eine Verdrehsicherung in perspektivischer Darstellung,
- Fig. 2: einen Schnitt durch die Verdrehsicherung gemäß Fig. 1 in eingebautem, gesicherten Zustand,
- Fig. 3: einen Schnitt durch die Verdrehsicherung gemäß Fig. 1 in eingebautem, durch ein Werkzeug entriegelten Zustand,
- Fig. 4: eine zweite Verdrehsicherung mit einrastenden elastischen Federarmen und
- Fig. 5: eine schematische Darstellung des möglichen Einflusses einer ungleichen und einer gleichen Anzahl von Nuten und Federarmen.

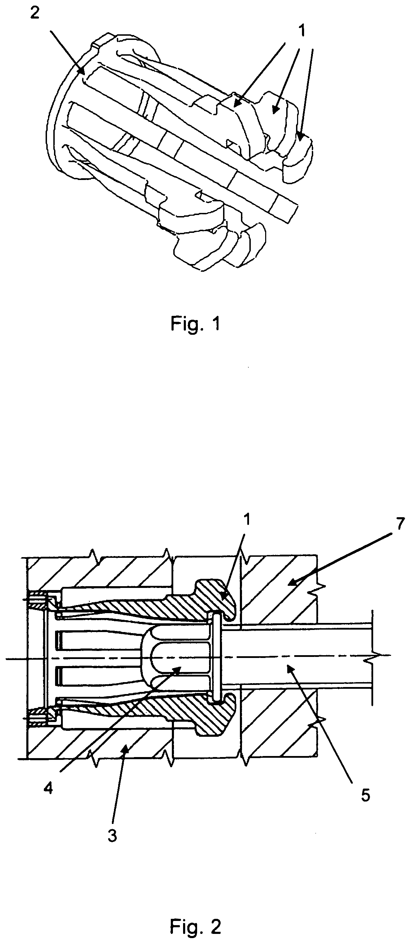

Die Abbildung gemäß Fig. 1 zeigt ein Sicherungselement für Verdrehsicherung in perspektivischer Darstellung. Bei dem Element ist eine Reihe elastischer Arme 1, im Fall des hier dargestellten Ausführungsbeispiels acht, kreisförmig und äquidistant angeordnet, wobei die Arme 1 mit jeweils einem Ende an einem ringförmigen Teil 2 gehaltert sind.

Nach dem Einbau in ein entsprechendes Bauteil 3 greifen, wie in Fig. 2 dargestellt, die elastischen Arme 1 um einen im Fall des hier dargestellten Ausführungsbeispiels sechseckigen Kopf 4 einer gegen ein mögliches Verdrehen zu sichernden Schraube 5. Das Verdrehen der Schraube 5 ist dadurch nur noch um wenige Winkelgrad und nur so lange möglich, bis die Kanten des Kopfes 4 der Schraube 5 an den Armen 1 zur Anlage gelangen und die entstehende axiale Kraft ein weiteres Verdrehen verhindert. Das Sicherungselement ist dabei mit dem Bauteil 3 verbunden, das als Widerlager für die auftretenden axialen Kräfte dient und das über die Schrauben 4 an einem zweiten Bauteil 7 gehaltert ist.

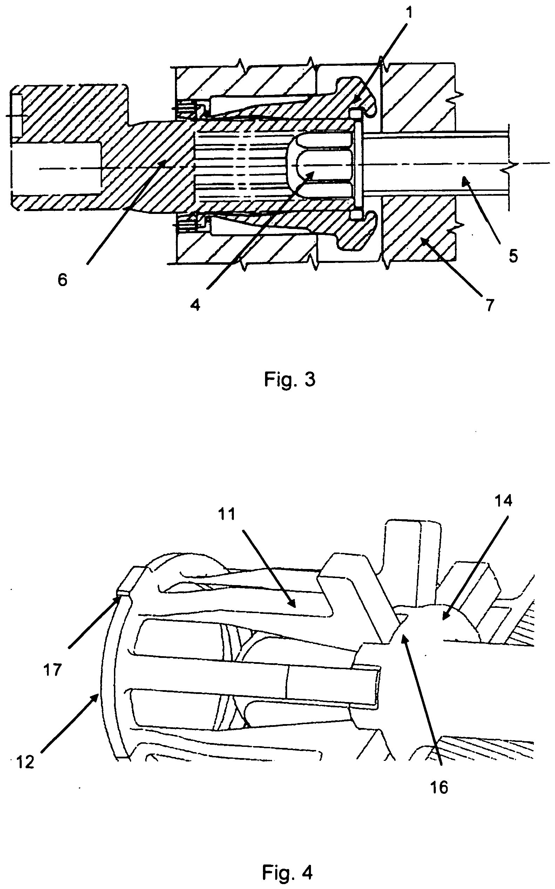

Fig. 3 zeigt, wie die auf diese Weise in Funktion gebrachte Verdrehsicherung durch das Einsetzen eines herkömmlichen Schraubendrehwerkzeuges 6 in Form einer Werkzeug-Nuß entriegelt wird. Die Außenseite des Schraubendrehwerkzeuges 6 drückt dazu von innen her gegen die Arme 1 des Sicherungselementes und verformt diese so weit elastisch, daß sie den Schraubenkopf 4 freigeben. Die Schraube 5 kann nun mit Hilfe des Werkzeuges 6 frei herausgedreht werden. Soll sie erneut eingedreht und gegen Verdrehen gesichert werden, so biegt zunächst der Schraubenkopf 4 die elastischen Arme 1 bis zu ihrer Entsicherung vom Schraubenkopf 4 nach außen. Diese Stellung wird anschließend durch das Werkzeug 6 aufrecherhalten. Nach dem Entfernen des Werkzeuges 6 verriegeln die elastischen Arme 1 den Schraubenkopf 4 erneut, unabhängig von der Winkelstellung der Schraube 5 bzw. des Schraubenkopfes 4. Auf diese Weise wird eine bei einer unerwünschten Drehung der Schraube 5 entstehende axiale Bewegung der Schraube 5 zuverlässig verhindert und das Herausdrehen der Schraube 5 somit unterbunden.

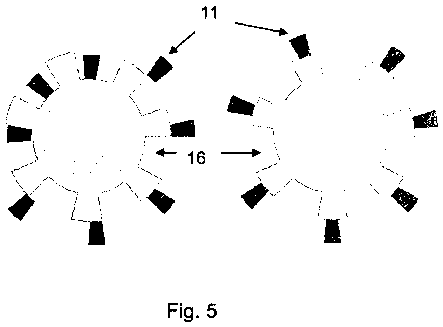

Bei der in Fig. 4 gezeigten zweiten Ausführungsform des Sicherungselementes rasten die elastischen Arme 11 in Nuten 16 eines Schraubenkopfes 14 ein und verhindern damit zuverlässig ein Verdrehen der Schraube. Es ist in dieser Ausführung allerdings vergleichsweise schwierig, die Arme einzurasten und gleichzeitig ein vorgegebenes Anzugsmoment auf die Schraube aufzubringen, da die genaue Position der Aussparungen bei der Fertigung des Gewindes nicht präzise genug festgelegt werden kann. Dieses Problem wird gemäß der in Fig. 5 gezeigten bevorzugten Ausführungsform dadurch gelöst, daß die Anzahl der Nuten 16 um wenigstens eins geringer als die Anzahl der Arme 11 gewählt ist, wobei die Nuten 16 zusätzlich größer sind als die Breite der Arme 11. Auf diese Weise ist sichergestellt, daß immer zumindest ein Arm 11 in einer Nut 16 einrastet und ein Verdrehen der Schraube verhindert wird.

Bei dieser zweiten Ausführungsform ist es zudem insbesondere vorteilhaft, wenn die Arme 11 in radialer Richtung vergleichsweise dünn ausgebildet sind, um eine leichte Verformbarkeit durch das Schraubendrehwerkzeug zu erreichen. Zugleich sind vorzugsweise die Arme 11 in tangentialer Richtung vergleichsweise breit ausgebildet, um die auftretenden Torsionskräfte aufnehmen zu können. Weiterhin ist es in diesem Fall vorteilhaft, im zweiten Bauteil zusätzliche Führungen vorzusehen, die mit entsprechenden Auskragungen 17 des ringförmigen Teiles 12 korrespondieren und die auf die Arme 11 einwirkende Torsionskräfte aufnehmen können.

## Patentansprüche

1. Verdrehsicherung für eine Schraube zur lösbaren Verbindung einer zu einer Weltraumstation zu transportierenden Nutzlast als erstem Bauteil (3) mit einer in einem Transportfahrzeug angeordneten Halterung als zweitem Bauteil (7), bei der Sicherungselemente die Schraube (5) beaufschlagen, **dadurch gekennzeichnet, daß** die Sicherungselemente als elastisch verschwenkbare Arme (1, 11) ausgebildet und kreisförmig und äquidistant mit jeweils einem Ende an einem ringförmigen Teil (2, 12) gehaltert sind, das seinerseits mit dem ersten Bauteil (3) verbindbar ist, welches mittels der Schraube (5) an dem zweiten Bauteil (7) gehaltert ist, wobei die Arme (1, 11) mit ihrem jeweils anderen Ende am Kopf (4, 14) der Schraube (5) anlegbar sind , wobei Kanten des Kopfes (4) an den Armen (1, 11) in Anlage gelangen oder die Arme (1, 11) in Nuten (16) des Kopfes (14) einrasten, wodurch ein Verdrehen der Schraube (5) verhindert wird, und wobei die Arme (1, 11) mittels eines Außenmantels einer einsteckbaren Hülse eines Werkzeuges (6) zum Verdrehen der Schrauben (5) aus einer Halteposition entriegelbar sind, wobei das Werkzeug (6) von innen her gegen die Arme (1, 11) drückt und diese soweit elastisch verformt, bis sie den Kopf (4, 14) freigeben.

2. Verdrehsicherung nach Anspruch 1, **dadurch gekennzeichnet, daß** insgesamt acht Arme (1, 11) vorgesehen sind.

3. Verdrehsicherung nach Anspruch 1 oder 2, **dadurch gekennzeichnet, daß** die Arme (1, 11) durch das Einführen eines Schraubendrehwerkzeuges (6) in das Innere des ringförmigen Teiles (2, 12) entriegelbar sind.

4. Verdrehsicherung nach einem der vorhergehenden Ansprüche, **dadurch gekennzeichnet, daß** die Anzahl der Nuten (16) um wenigstens eins geringer als die Anzahl der Arme (11) gewählt ist.

5. Verdrehsicherung nach Anspruch 4, **dadurch gekennzeichnet, daß** die Nuten (16) größer sind als die Breite der Arme (11).

6. Verdrehsicherung nach Anspruch 4 oder 5, **dadurch gekennzeichnet, daß** über einen Teil ihrer Länge die Erstreckung der Arme (11) in radialer Richtung geringer ist als in tangentialer Richtung.

7. Verdrehsicherung nach einem der Ansprüche 4 bis 6, **dadurch gekennzeichnet, daß** am ringförmigen Teil (12) Auskragungen (17) vorgesehen sind, die mit entsprechenden Führungen am zweiten Bauteil zusammenwirken.

## Claims

1. Anti-twist protection for a screw for the detachable connection of a payload to be transported to a space station as the first component (3) with an holder, arranged in a transporting vehicle, as the second component (7), in which securing elements act on the screw (5), **characterised in that** the securing elements are designed as elastically swivellable arms (1, 11) and are held annularly and equidistantly with one end in each case on an annular section (2, 12) which in turn is connectable by means of the screw (5) to the second component (7), wherein the arms (1, 11) can with their other end be applied to the head (4, 14) of the screw (5), wherein edges of the head (4) come into contact with the arms (1, 11) or the arms (1, 11) engage in screws (16) of the head (14), through which twisting of the screw (5) is prevented, and wherein the arms (1, 11) can be released from a holding position by means of an outer mantle of an insertable sleeve of a tool (6) for rotating the screws (5), wherein the tool (6) presses from the interior against the arms (1, 11) and deforms these elastically until they release the head (4, 14).

2. Anti-twist protection according to claim 1, **characterised in that** eight arms (1, 11) are provided in total.

3. Anti-twist protection according to claim 1 or 2 **characterised in that** the arms can be unlocked through the insertion of a screw-rotating tool (6) into the interior of the annular section (2, 12)

4. Anti-twist protection according to any one of the preceding claims **characterised in that** the number of grooves (16) is selected to be at least one fewer than the number of arms (11).

5. Anti-twist protection according to claim 4, **characterised in that** the grooves (16) are larger than the width of the arms (11).

6. Anti-twist protection according to claim 4 or 5 **characterised in that** over part of their length, the extension of the arms (11) is smaller in the radial direction than in the tangential direction.

7. Anti-twist protection according to any one of claims 4 to 6 **characterised in that** on the annular section (12) projections (17) are provided which interact with corresponding guides on the second component.

## Revendications

1. Blocage anti-rotation pour une vis, destinée à l'assemblage amovible d'une charge utile devant être transportée vers une station spatiale en tant que premier composant (3) avec une attache placée dans un véhicule de transport en tant que deuxième composant (7), sur lequel des éléments de blocage agissent sur la vis (5), **caractérisé en ce que** les éléments de blocage sont conçus sous la forme de bras (1, 11) pivotants élastiques et sont maintenus en forme de cercle et de manière équidistante par chaque fois une extrémité sur une pièce (2, 12) de forme annulaire, qui d'une part peut s'assembler avec le premier composant (3), lequel à l'aide de la vis (5) est maintenu sur le deuxième composant (7), par leur autre extrémité respective, les bras (1, 11) pouvant être appliqués sur la tête (4, 14) de la vis (5), des arêtes de la tête (4) venant s'appliquer sur les bras (1, 11) ou les bras (1, 11) s'enclenchant dans des rainures (16) de la tête (14), suite à quoi, une rotation de la vis (5) étant empêchée et à l'aide d'une enveloppe extérieure d'une douille insérable d'un outil (6) destiné à faire tourner les vis (5), les bras (1, 11) étant déverrouillables à partir d'une position de retenue, l'outil (6) poussant à partie de l'intérieur contre les bras (1, 11) et les déformant élastiquement jusqu'à ce qu'ils libèrent la tête (4, 14).

2. Blocage anti-rotation selon la revendication 1 **caractérisé en ce qu'**il est prévu un total de huit bras (1, 11).

3. Blocage anti-rotation selon la revendication 1 ou la revendication 2, **caractérisé en ce que** les bras (1, 11) sont déverrouillables par l'introduction d'un outil tournevis (6) à l'intérieur de la pièce (2, 12) annulaire.

4. Blocage anti-rotation selon l'une quelconque des revendications précédentes, **caractérisé en ce que** le nombre de rainures (16) est choisi en étant inférieur d'au moins un au nombre des bras (11).

5. Blocage anti-rotation selon la revendication 4, **caractérisé en ce que** les rainures (16) sont plus grandes que la largeur des bras (11).

6. Blocage anti-rotation selon la revendication 4 ou la revendication 5, **caractérisé en ce que** sur une partie de sa longueur, l'extension des bras (11) en direction radiale est inférieure à leur direction tangentielle.

7. Blocage anti-rotation selon l'une quelconque des revendications 4 à 6, **caractérisé en ce que** sur la pièce (12) annulaire sont prévus des saillies (17) qui coopèrent avec des guides correspondants sur le deuxième composant.
